# EUROPEAN PATENT SPECIFICATION

(11) **EP 1 153 516 B1**
(45) Date of publication and mention of the grant of the patent: **31.01.2007**
(21) Application number: 99913222.8
(22) Date of filing: 25.02.1999
(51) Int. Cl.: H04Q 7/22, H04Q 7/38, H04B 7/26, H04L 27/20

(54) **AN OUTBAND SIGNALING METHOD FOR TRANSPARENT DATA SERVICES**
AUSSENBANDSIGNALISIERUNGSVERFAHREN FÜR TRANSPARENTE DATENDIENSTE
PROCEDE DE SIGNALISATION HORS BANDE POUR SERVICE DE DONNEES TRANSPARENTES

(43) Date of publication of application: 14.11.2001
(73) Proprietor: Nokia Corporation, 02150 Espoo (FI)
(72) Inventor: NIEMELÄ, Kari, FIN-90650 Oulu (FI)
(74) Representative: TBK-Patent
(86) International application number: PCT/EP1999/001385
(87) International publication number: WO 2000/051363

(56) References cited:
- WO-A-98/10569
- WO-A-98/18244
- GB-A- 2 174 571
- GB-A- 2 268 362

## Description

### FIELD OF THE INVENTION

The present invention relates to a signaling method for transparent data services in a wireless telecommunication system, in particular to such a signaling method which enables outband signaling. The present invention is applicable in connection with the enhanced circuit switched data concept (ECSD) for enhanced data for GSM evolution (EDGE) and/or in connection with the high speed circuit switched data concept HSCSD.

### BACKGROUND OF THE INVENTION

Wireless telecommunication systems or mobile radio telecommunication networks are increasingly spreading since several years. Those radio telecommunication systems are operated, for example, according to TDMA methods (TDMA = time divisional multiple access). Moreover, in order that a subscriber to the mobile network may be enabled to communicate with other subscribers in a public switched telephone network (PSTN), so called interworking functionalities (such as transcoding) have to be provided for.

An example of such a PSTN network is the integrated service digital network ISDN. According to ISDN specification, two so-called B-channels B₁-CH, B₂-CH are provided for transmission of use data on the respective use data channel, while control data or signaling data, according to ISDN, is transmitted separately on a so-called D-Channel as an ISDN signaling channel. The ISDN use data channels (B-CH) provide a transmission rate of 64 kbit/s each, while the ISDN signaling channel (D-CH) provides a transmission rate of 16 kbit/s. The B-channel transmission is independent from the D-channel transmission, stated in other words, the use data flow need not be interrupted for signaling. Also, the above ISDN concept provides a so-called transparent data service.

In case the ISDN PSTN has to communicate with a radio telecommunication system such as a system conforming to the GSM system, the use data and signaling data channel concept of ISDN has to be transformed and/or mapped to the channel concept of the radio telecommunication system.

This means that the B-channel(s) of ISDN will have to correspond to traffic channels TCH of the radio telecommunication system, while the D-channel will have to correspond to a control channel CCH of the radio telecommunication system.

As such control channels, a slow associated control channel SACCH could be considered to be used as the corresponding signaling channel.

However, the current data rate provided by a SACCH logical control channel is (by way of agreed specification) only 0.46 kbit/s and is thus too low to be used for transmission of the amount of signaling data transmitted via the D-channel according to ISDN.

Alternatively, existing radio telecommunication systems provide a fast associated control channel FACCH for transmission of signaling information. Hitherto this control channel has been used for the transmission of the signaling data contained in the ISDN D-channel.

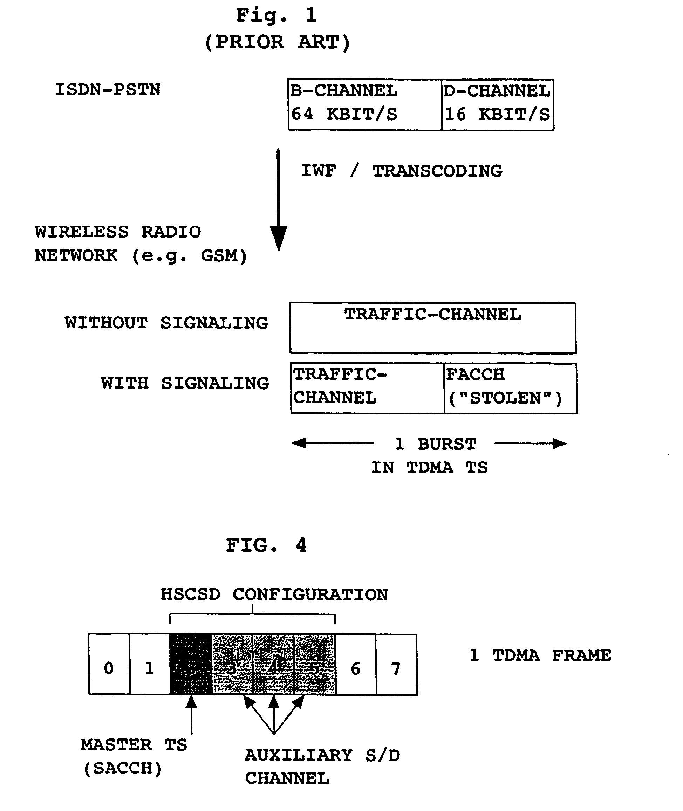

However, it has to be noted that the FACCH is associated to a respective traffic channel TCH. This means, that in case there is a need for transmitting signaling information, bursts of the traffic channel are "stolen" to be used as the FACCH channel. This prior art situation is roughly illustrated in Fig. 1 of the drawings, in which the FACCH signaling channel "occupies" part of a burst normally available for the traffic channel TCH (only one burst of a TDMA time slot of a TDMA frame has been illustrated). The FACCH may occupy several consecutive bursts as well. Bursts reserved for FACCH may be GMSK modulated, despite of an 8PSK modulated traffic channel TCH.

If the FACCH is thus used for signaling purposes, due to the stealing of bursts from the traffic channel, about 110 ms of data, relating to the interleaving depth, on the traffic channel are disturbed per signaling operation.

If, however, a video call is transmitted via the ISDN PSTN in combination with a radio telecommunication network, this may cause already visual disturbances to the video call, since the design value for ISDN connections of a bit error rate of BER < 10⁻⁷ can no longer be kept.

Hence, with the above briefly introduced existing solution, there are limitations regarding available services in that for example, no video calls could be satisfactorily transmitted due to the disturbance of the transparent bit data flow during signaling.

Thus, ISDN services consisting of use data (64 kbit/s, B-Ch) and signaling data (16 kbit/s, D-Ch) can not be applied for the EDGE concept in a fluent way.

Further prior art arrangements are known from documents GB 2174571 A, WO 9818244 A, WO 9810569 A and GB 2268362 A.

### SUMMARY OF THE INVENTION

Therefore, it is an object of the present invention to provide a signaling method for transparent data services in a wireless telecommunication system which method is free from the above mentioned drawbacks so that the transparent data flow is not disturbed.

According to an aspect of the present invention, this object is achieved by a signaling method as defined in claim 1.

In a particular advantageous manner said signaling data are subjected to 8-level PSK modulation. Still further favorable refinements of the present invention are as set out in the additional dependent claims.

Moreover, according to another aspect of the present invention, this object is achieved by a signaling method as defined in claim 6.

Thus, due the present invention, outband signaling is enabled without any disturbances to the transparent data flow. Moreover, due to the expanded possible data rate on the SACCH signaling channel, an auxiliary data channel can be established. Thus, the SACCH channel can carry ISDN signaling information as well as information regarding cellular supplementary services like call waiting, holding etc., while it can also be used for transmission of user data.

The obtained (additional) data rate useable for signaling and/or use data is typically in the range of 0.9 kbit/s to 2.3. kbit/s, depending on the number of used time slots in a TDMA radio connection.

### BRIEF DESCRIPTION OF THE DRAWINGS

The present invention will be described herein below with reference to the drawings, in which
Fig. 1 illustrates a situation which represents prior art when ISDN use data channels and ISDN signaling channels are transformed to respective logical channels of a wireless telecommunication system;
Fig. 2 illustrates a first way of implementation of the present invention on a TDMA frame level for a singleslot operation according to the first aspect of the invention;
Fig. 3 illustrates a second way of implementation of the present invention on a TDMA frame level for a multislot operation according to the first aspect of the invention; and
Fig. 4 illustrates the second aspect of the present invention on a TDMA frame level in connection with a HSCSD concept.

### DETAILED DESCRIPTION OF THE INVENTION

Subsequently, the present invention will be described in detail with reference to the drawings.

According to the first aspect of the present invention, the slow associated control channel SACCH is used for signaling, while signaling data transmitted on the signaling channel SACCH are subjected to an enhanced modulation method carries more signaling data. In a favorable implementation of the present invention, 8-level PSK modulation, also referred to as 8PSK, is applied for modulating (at least part of) the signaling data which are transmitted during respective bursts on the SACCH channel, whereas, for example, GMSK modulation is still the method for modulating the use data (or those signaling data not subjected to 8PSK modulation).

By virtue of the 8PSK modulation applied to the signaling data bursts, the total signaling speed or transmission rate obtained for the SACCH channel is improved by a factor of about three. Namely, with a channel coding of a coding rate of 0.5, the current transmission rate of the SACCH (without the present invention being applied thereto) is about 0.46 kbit/s, while the transmission rate of the SACCH signaling channel, at a channel coding rate of 0.5, with the present invention being applied turns out to be about 1.37 kbit/s.

Thus, typically about 0.9 kbit/s (and up to about 2.3 kbit/s, depending on the number of time slots of a TDMA frame used) can additionally be used for signaling and/or data transmission purposes. The additional transmission capacity thus represents an auxiliary data channel to be used if necessary.

These principles of the present invention will now be explained in further detail in conjunction with the drawings.

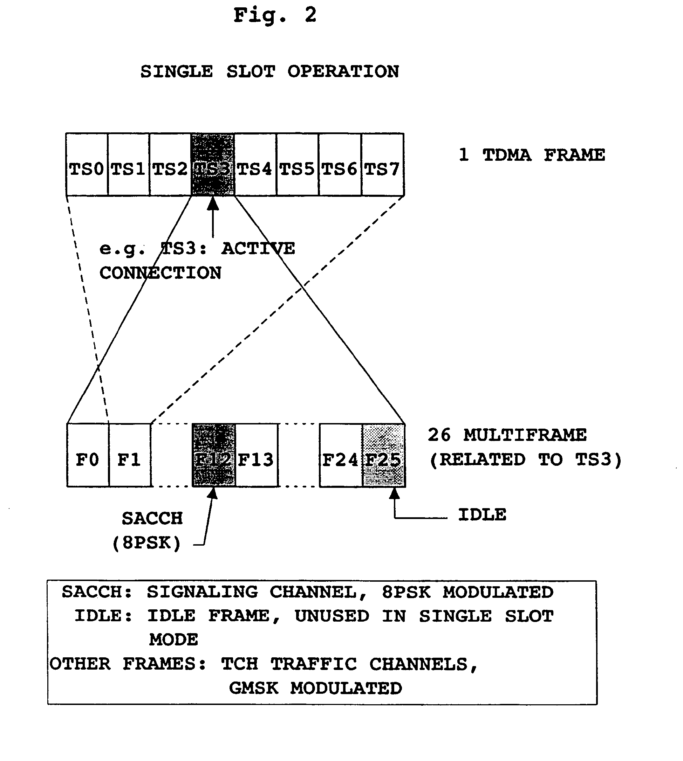

Fig. 2 illustrates a first way of implementation of the present invention on a TDMA frame level for a singleslot operation.

Generally, in telecommunication systems operated according to TDMA, data are transmitted in bursts during time slots TS of TDMA frames. A respective number of time slots TS in a TDMA frame constitutes a channel. Individual frames are grouped to form so-called multiframes, in which a respective frame is assigned to a respective logical channel.

Fig. 2 illustrates such an example conforming to the GSM standard which defines a so-called 26 multiframe by 26 TDMA frames (F0 ... F25), each TDMA frame consisting of 8 time slots TS (TS0 ... TS7).

However, this representation is chosen as an example only and the present invention can easily be applied to other TDMA systems having for example a number of time slots different from eight.

Now specifically with reference to Fig. 2, a so-called singleslot arrangement is shown, according to which a single time slot (TS3 in the illustrated example), represents a communication link for a transmission between a specific mobile terminal and a base transceiver station in a radio telecommunication network.

Twenty-six of such TDMA frames are grouped to form a 26-multiframe. In such a multiframe, frames with numbers 0 to 11, and 13 to 24 represent logical traffic channels TCH (represented as "T") for transmitting use data, frame number 12 represents the slow associated control channel SACCH for transmitting signaling information, and frame number 25 represents an unused idle frame in this 26-multiframe arrangement.

Now, according to the present invention, the bursts in the frame having the frame number 12 (SACCH channel) is then subjected to 8PSK modulation, while all other frames are subjected to GMSK modulation.

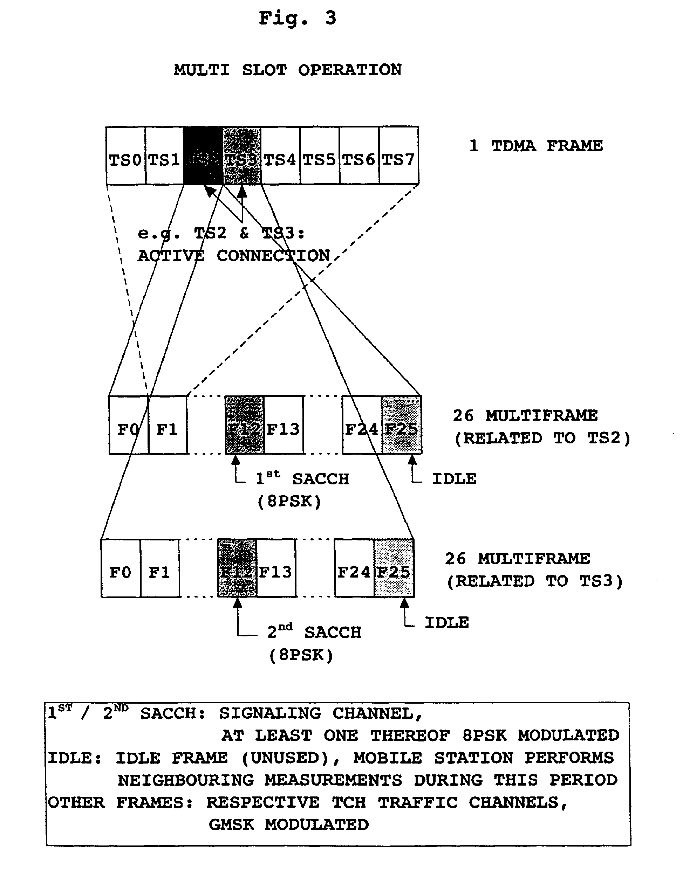

Furthermore, Fig. 3 illustrates a second way of implementation of the present invention on a TDMA frame level for a multislot operation. The same basic explanations regarding time slots and frames / multiframes hold for this figure, so that only respective differences are subsequently explained.

According to Fig. 3 it is assumed that a communication link is established by two time slots (illustrated by TS2 & TS3 in the illustrated example). Then, in a corresponding multiframe arrangement, frame number 12 represents the SACCH channel for the communication link, associated to the (two) timeslots of the adopted multislot arrangement. It has to be noted that the traffic channels associated to the respective timeslots, in the multiframe arrangement, are alternately transmitted from frame to frame.

More precisely, in a 26 multiframe arrangement related to time slot TS2, frame number 12 (F12) represents the associated SACCH channel, and frame F25 represents an idle channel, while the others frames represent traffic channels associated to the respective timeslots TS2, TS3, and are alternately transmitted from frame to frame. Similarly, in a 26 multiframe arrangement related to time slot TS3, frame number 12 (F12) represents the associated SACCH channel, and frame F25 represents an idle channel, while the others frames represent traffic channels associated to the respective timeslots TS2, TS3, and are alternately transmitted from frame to frame.

Thus, the normal multiframe structure is changed so that the SACCH is represented by frame F12 for all time slots in a multislot operation, to thereby have an idle period at the same time. During this idle period (IDLE frame F25), a mobile terminal station performs measurements regarding neighboring base transceiver stations.

This situation is graphically represented by the lower part of Fig. 3 showing an individual multiframe structure for both time slots used in the multislot arrangement, where in both multiframes frame F12 is utilized as the SACCH.

In such a multislot arrangement, it is then possible to use only one of the timeslots for enhanced signaling. Stated in other words, only one of the associated SACCH channels (during frame 12) can be subjected to 8PSK modulation, while the other one could still be subjected to GMSK modulation. Nevertheless, the highest additional transmission rate can be gained if both of them are subjected to 8PSK modulation.

Thus, while the currently agreed signaling speed, i.e. transmission rate, in existing standards for the SACCH channel is 0.46 kbit/s, with the present invention this transmission rate can be expanded by a factor of approximately 3 to about 1.37 kbit/s (at a channel coding rate of 0.5).

The following table illustrates some examples of available additional signaling/data transmission rates with the present invention being implemented. Note that the table represents results for a case in which all respectively possible SACCH frames have been subjected to 8PSK modulation. Therefore, in multislot operation using two time slots, the overall obtained transmission rate for SACCH is twice the value of the rate for single slot operation. Namely, for single slot operation (1 slot): 0.91 kbit/s + 0.46 kbit/s = 1.37 kbit/s ; while for multislot operation (2 slots): 2.28 kbit/s + 0.46 kbit/s = 2.74 kbit/s = 2* 1,37 kbit/s.

**TABLE 1:**

| SERVICE | SINGLE- (1) / MULTI- (2) SLOT | ADDITIONAL S/D RATE | SACCH RATE |
|---|---|---|---|
| 8PSK | 1*28.8 kbit/s | 0.91 kbit/s | 0.46 kbit/s |
| 8PSK | 2*28.8=56kbit/s | 2.28 kbit/s | 0.46 kbit/s |
| 8PSK | 2*32=64 kbit/s | 2.28 kbit/s | 0.46 kbit/s |

As mentioned above, with bursts during respective time slots and/or frames associated to the SACCH control channel being 8PSK modulated, the corresponding transmission rate can be expanded to a value of about 1.37 kbit/s in the SACCH channel per burst. Thus, the difference between the hitherto possible (and agreed) SACCH channel transmission rate of 0.46 kbit/s and the newly obtained rate of 1.37 kbit/s represents an additional resource for either signaling or data transmission (auxiliary data channel) in a range of typically 0.9 to 2.3 kbit/s, as indicated in the column "additional S/D rate". It should, however, be noted that the sum of the "additional S/D rate" and the "SACCH rate" represents the possible SACCH rate of the present invention.

Although not indicated in the above table, it should be kept in mind that in case of a multislot operation like 2*32 kbit/s, it is possible to use only one time slot for enhanced signaling, i.e. to subject only one time slot / frame corresponding to a SACCH channel, to the 8PSK modulation, while the other one could still be GMSK modulated.

Further, it is possible to use 8PSK modulated SACCH channels on demand. This is possible through a blind detection of modulation type, which is based on different training sequences for both modulations. This enables to use GMSK as a more robust modulation for the SACCH when there is no need for additional signaling capacity.

Referring to Fig. 4 of the drawings, according to a second aspect of the present invention, a high speed circuit switched data concept HSCSD as graphically exemplified on a TDMA frame level in Fig. 4 can be adopted in order to solve the problem underlying the present invention.

According to HSCSD, plural time slots (at least two) are grouped to form one channel or communication link. Among the group of time slots, one time slot is defined as a so-called master time slot which serves as the (logical) control channel SACCH, while the other time slots of the group of time slots constitute (logical) traffic channels which are available for the transmission of data and/or signaling information. Thus, the other time slots which are different from the master time slot could be regarded as representing an auxiliary data channel (which was previously obtained due to the 8PSK modulation)

In detail, Fig. 4 illustrates an example of a HSCSD implementation using four time slots TS2 to TS5 of a TDMA frame of eight time slots TS0 to TS7. Time slot TS2 is assumed to be defined as the master time slot, while the bursts transmitted during the other time slots according to this example may be assumed to constitute the auxiliary data/signaling channel.

The following table shows some available signaling rates according to this second aspect of the present invention.

**TABLE 2:**

| SERVICE | NUMBER OD SLOTS USED FOR HSCSD CONFIGURATION | ADDITIONAL S/D RATE | SACCH RATE (MASTER TIME SLOT) |
|---|---|---|---|
| GMSK | 2*14.4=28.8 kbit/s | 0.46 kbit/s | 0.46 kbit/s |
| GMSK | 4*14.4=56 kbit/s | 1.37 kbit/s | 0.46 kbit/s |

The lowest row of this table could be regarded as corresponding to the example illustrated in Fig. 4. Out of four time slots used for the HSCSD configuration, one is used as the SACCH channel, while the other three time slots are used for auxiliary signaling/data transmission. When compared to the two time slot arrangement, according to which only one time slot constitutes the auxiliary channel (overall 2 HSCSD time slots), the transmission rate is three times as great in the four time slot configuration, since three out of four time slots constitute the auxiliary channel (1.37 kbit/s = 3 * 0.46 kbit/s).

However, it should be noted that of the time slots available in the HSCSD configuration, not all time slots different from the master time slot are required to be used for constituting the auxiliary signaling/data channel. At least one of them is sufficient, and dependent on the specific situation, one or more of the remaining time slots of the HSCSD configuration can be used to supplement the transmission rate of the master time slot used as the SACCH channel.

Furthermore, apart from applying the present invention to transparent data services as mentioned above, it could also be applied to speech or non transparent data. However, speech or non transparent data quality is not as much adversely affected by the FACCH channel which steals bursts from a traffic channel. Therefore, the necessity to use the 8PSK modulation for the SACCH in connection with speech or non transparent data transmission is not so big.

Moreover, the benefits of the present invention can be further supported by using an optimized channel coding and/or by adopting an optimized routing of signaling/data in interfaces within the system which are different from the air interface Ub.

Also, if the additional transmission rate provided by the proposed invention, i.e. by the 8PSK modulated SACCH channel and/or the HSCSD concept is still not fully sufficient for some application purposes, it could be supplemented by the FACCH channel which uses some stolen bursts.

It should be understood that the above description and accompanying figures are merely intended to illustrate the present invention by way of example only. The preferred embodiments of the present invention may thus vary within the scope of the attached claims.

## Claims

1. A signaling method for transparent data services in a wireless telecommunication system, which services transmit use data on a use data channel (**TCH**) separately from associated signaling data transmitted on a signaling channel **(SACCH), characterized in that**
signaling data transmitted on the signaling channel (**SACCH**) are subjected to an enhanced modulation method which allows to carry more signaling data without expanding the physical signaling channel.

2. A method according to claim 1, wherein said signaling data are subjected to 8-level PSK modulation.

3. A method according to claim 1, wherein the transmission rate of the signaling channel (**SACCH**) is increased such that it is adapted to transmit the signaling data as well as to simultaneously serve as an auxiliary data channel.

4. A method according to claim 2, wherein said wireless telecommunication system is adapted to operate according to a TDMA method and data are transmitted in units of bursts during time slots of TDMA frames, and bursts carrying the signaling information are subjected to 8-level PSK modulation.

5. A method according to claim 4, wherein data transmission is based on a multislot arrangement, such that n, with n > 1, time slots of a TDMA frame constitute a use data channel and a corresponding number of n signaling data channels is present, and at least one of said n signaling data channels is subjected to 8-level PSK modulation.

6. A signaling method for transparent data services in a wireless telecommunication system, which services transmit use data on a use data channel (**TCH**) separately from associated signaling data transmitted on a signaling channel (**SACCH**), **characterized in that**
data transmission is based on a HSCSD configuration such that a plurality of at least two time slots of a TDMA frame are grouped to define a HSCSD channel and one of said grouped time slots is defined as a master channel (**SACCH**) carrying signaling data, and at least one of the other time slots is used as an auxiliary signaling and/or data channel.

## Patentansprüche

1. Signalisierungsverfahren für transparente Datendienste in einem drahtlosen Telekommunikationssystem, wobei diese Dienste Nutzdaten auf einem Nutzdatenkanal (TCH) getrennt von zugehörigen Signalisierungsdaten übertragen, die auf einem Signalisierungskanal (SACCH) übertragen werden,
**dadurch gekennzeichnet, dass**
auf dem Signalisierungskanal (SACCH) übertragene Signalisierungsdaten einem erweiterten Modulationsverfahren unterzogen werden, das ermöglicht, dass mehr Signalisierungsdaten transportiert werden, ohne den physikalischen Signalisierungskanal zu vergrößern.

2. Verfahren gemäß Anspruch 1, wobei die Signalisierungsdaten einer 8-Stufen-PSK-Modulation unterzogen werden.

3. Verfahren gemäß Anspruch 1, wobei die Übertragungsrate des Signalisierungskanals (SACCH) derart erhöht wird, dass sie angepasst ist, sowohl die Signalisierungsdaten zu übertragen als auch gleichzeitig als ein Hilfsdatenkanal zu dienen.

4. Verfahren gemäß Anspruch 2, wobei das drahtlose Telekommunikationssystem angepasst ist, gemäß einem TDMA-Verfahren zu arbeiten, und Daten in Einheiten von Übertragungsblöcken während Zeitschlitzen von TDMA-Rahmen übertragen werden, und die Signalisierungsinformationen transportierende Übertragungsblöcke einer 8-Stufen-PSK-Modulation unterzogen werden.

5. Verfahren gemäß Anspruch 4, wobei eine Datenübertragung auf einer Mehrschlitzanordnung basiert, so dass n Zeitschlitze eines TDMA-Rahmens, mit n > 1, einen Nutzdatenkanal bilden und eine entsprechende Anzahl von n Signalisierungsdatenkanälen vorhanden ist, und zumindest einer der n Signalisierungsdatenkanäle einer 8-Stufen-PSK-Modulation unterzogen wird.

6. Signalisierungsverfahren für transparente Datendienste in einem drahtlosen Telekommunikationssystem, wobei diese Dienste Nutzdaten auf einem Nutzdatenkanal (TCH) getrennt von zugehörigen Signalisierungsdaten übertragen, die auf einem Signalisierungskanal (SACCH) übertragen werden,
**dadurch gekennzeichnet, dass**
eine Datenübertragung auf einer HSCSD-Konfiguration basiert, so dass eine Vielzahl von zumindest zwei Zeitschlitzen eines TDMA-Rahmens gruppiert werden, um einen HSCSD-Kanal zu definieren, und einer der gruppierten Zeitschlitze als ein Hauptkanal (SACCH) definiert wird, der Signalisierungsdaten transportiert, und zumindest einer der anderen Zeitschlitze als ein Hilfssignalisierungs- und/oder -datenkanal verwendet wird.

## Revendications

1. Procédé de signalisation pour des services transparents d'accès aux données dans un système de télécommunication sans fil, lesquels services transmettent des données utilisées sur un canal de trafic (TCH) séparément des données de signalisation associées transmises sur le canal de signalisation associé lent (SACCH), **caractérisé en ce que**
les données de signalisation transmises sur le canal de signalisation associé lent (SACCH) sont soumises à un procédé de modulation amélioré lequel permet de transporter plus de données de signalisation sans agrandir le canal de signalisation physique.

2. Procédé selon la revendication 1, dans lequel lesdites données de signalisation sont soumises à une modulation PSK (modulation par déplacement de phase) à 8 niveaux.

3. Procédé selon la revendication 1, dans lequel le taux de transmission des données sur le canal de signalisation associé lent (SACCH) est augmenté de sorte qu'il est adapté afin de transmettre les données de signalisation et de servir simultanément de canal de données auxiliaire.

4. Procédé selon la revendication 2, dans lequel ledit système de télécommunication sans fil est adapté pour fonctionner selon un procédé d'accès multiple par répartition dans le temps (TMDA) et dans lequel les données sont transmises sous la forme d'unités de rafales pendant des intervalles de temps de trames d'accès multiple par répartition dans le temps (TMDA), et dans lequel les rafales transportant les informations de signalisation sont soumises à une modulation PSK (modulation par déplacement de phase) à 8 niveaux.

5. Procédé selon la revendication 4, dans lequel la transmission de données est basée sur une disposition à intervalles de temps multiples, telle que n, avec n > 1, des intervalles de temps d'une trame d'accès multiple par répartition dans le temps (TMDA) forment un canal de trafic et un nombre correspondant de canaux de données de signalisation n est présent, et au moins un desdits canaux de données de signalisation n est soumis à une modulation PSK (modulation par déplacement de phase) à 8 niveaux.

6. Procédé de signalisation pour des services transparents d'accès aux données dans un système de télécommunication sans fil, lesquels services transmettent des données utilisées sur un canal de trafic (TCH) séparément des données de signalisation associées transmises sur le canal de signalisation associé lent (SACCH), **caractérisé en ce que**
la transmission de données est basée sur une configuration de service de données à commutation de circuits à haut débit (service HSCSD) de sorte qu'une pluralité d'au moins deux intervalles de temps d'une trame d'accès multiple par répartition dans le temps (TDMA) est groupée pour définir un canal de service de données à commutation de circuits à haut débit (HSCSD) et qu'un desdits intervalles de temps groupés est défini comme canal principal (SACCH) transportant des donnés de signalisation, et au moins un des autres intervalles de temps est utilisé comme canal de données et/ou de signalisation auxiliaire.
